# EUROPEAN PATENT SPECIFICATION

(11) **EP 2 905 187 B1**
(45) Date of publication and mention of the grant of the patent: **05.10.2016**
(21) Application number: 15153509.3
(22) Date of filing: 02.02.2015
(51) Int. Cl.: B60R 22/00

(54) **SAFETY BELT FOR RACING CAR**
SICHERHEITSGURT FÜR RENNFAHRZEUG
CEINTURE DE SÉCURITÉ POUR VOITURE DE COURSE

(30) Priority: 07.02.2014 IT TO20140103
(43) Date of publication of application: 12.08.2015
(73) Proprietor: O M P Racing S.p.A., 16019 Ronco Scrivia (GE) (IT)
(72) Inventor: Repetto, Matteo Maurizio, 16019 Ronco Scrivia (IT); Battaglia, Davide, 16163 Genova (IT)
(74) Representative: Bongiovanni, Simone

(56) References cited:
- WO-A2-2005/023592

## Description

The present invention relates to a safety belt for racing car.

As known in racing cars, such as those operating in the formula championships, safety belts are used being configured to make as stable as possible the positioning of the pilot on the car seat.

The safety belts used in this context are generally of the six anchoring points type and comprise:
- a fastening buckle;
- a first pair of band elements having the function of shoulder straps each provided with a first end portion configured to be fixed to the bearing structure of the vehicle and a second end portion provided with locking tab adapted to couple with the fastening buckle;
- a second pair of band elements having the function of the lateral retention of the pilot each provided with a first end portion configured to be fixed to the bearing structure of the vehicle and a second end portion provided with a locking tab adapted to couple with the fastening buckle;
- a third pair of band elements having the function of inguinal retention of the pilot each provided with a first end portion configured to be fixed to the bearing structure of the vehicle and a second end portion adapted to engage a metal buckle beared by the band elements having a lateral retention function. Typically, the metal buckle is D-shaped (this element is in fact known by the English term "D-ring").

In use, the "D-ring" metal buckle is arranged in the vicinity of the pilot inguinal area; in said position the metal buckle constitutes a potential danger for the pilot in case of accident.

The object of the present invention is to provide a racing car safety belt which solves the drawbacks of the known safety belts.

The previous object is achieved by the present invention in that the latter relates to a safety belt for racing car comprising: a fastening buckle; a first pair of band elements having the function of shoulder straps each provided with a first end portion configured to be fixed to the bearing structure of the vehicle and a second end portion provided with a locking tab adapted to couple with the fastening buckle; a second pair of band elements having the function of the lateral retention of the pilot each provided with a first end portion configured to be fixed to the bearing structure of the vehicle and a second end portion provided with a locking tab adapted to couple with the fastening buckle; a third pair of band elements having the function of the inguinal retention of the pilot each provided with a first end portion configured to be fixed to the bearing structure of the vehicle and a second end portion forming a ring adapted to be engaged by the second portion of the band elements having the function of shoulder straps when the first pair of band elements are coupled to the fastening buckle; belt-guide means beard by the second end portions of the band elements having the lateral retention function adapted to enable in the inside thereof the sliding of the band elements having the function of inguinal retention, **characterized in that** said belt-guide means comprise a first/a second ring obtained by means of a belt portion sewn on said second end portions of the band elements having the lateral retention function.

Preferably, each ring comprises a rectangular belt portion having a first end portion stably fixed by sewing on a band element having the lateral retention function and a second end portion stably fixed by means of sewing on the band element having the lateral retention function.

According to a preferred embodiment that is described and illustrated as a non-limiting example the rectangular portion has a central folded portion towards itself along a longitudinal midline; the perimeter facing edges of the central folded portion are permanently connected one to the other by rectilinear sewing.

The invention will now be illustrated with reference to the accompanying figures which illustrate a preferred non-limiting embodiment wherein:
- Figure 1 illustrates a safety belt for racing car according to the teachings of the present invention and arranged in a first operating position;
- Figure 2 illustrates a safety belt for racing car according to the teachings of the present invention and arranged in a second operating position; and
- Figure 3 illustrates - in an enlarged scale - a detail of the belt of Figures 1 and 2.

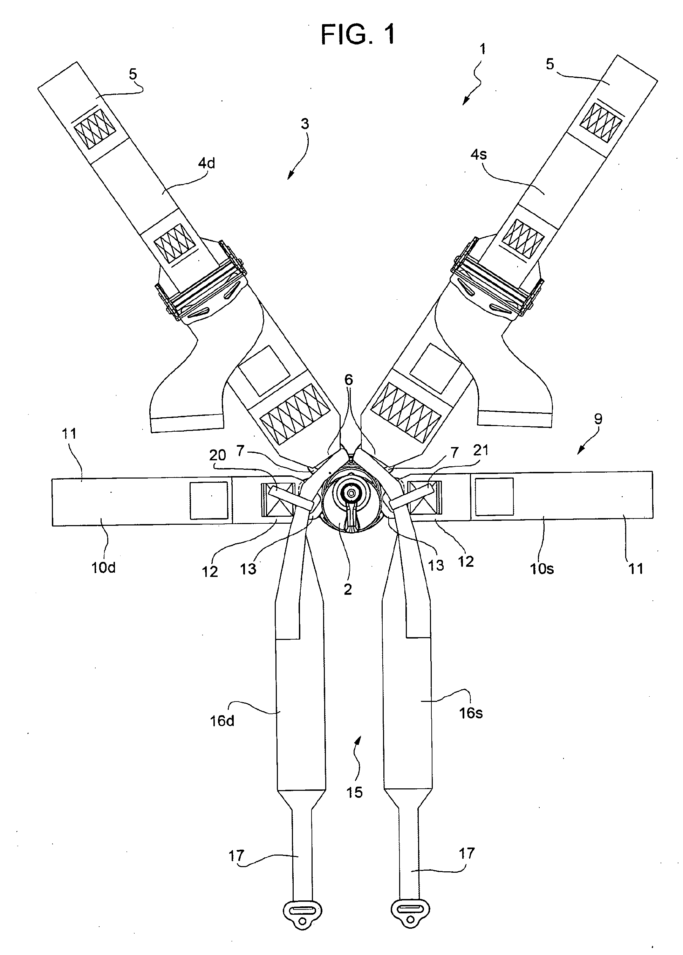

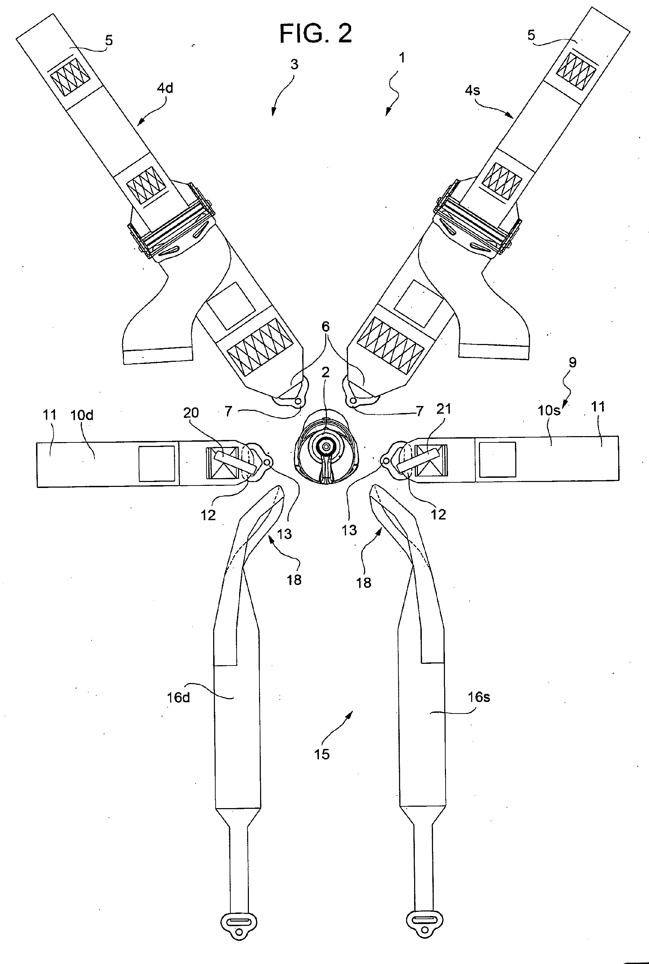

In figure 1 is indicated with 1, as a whole, a safety belt for racing car (for example a vehicle operating in the "Formula one" championship) comprising:
- a fastening buckle 2 of known type; (of course, the fastening buckle can be produced in different shapes than the one highlighted in the drawing)
- a first pair 3 of band elements 4d, 4s having the function of shoulder straps each provided with a first end portion 5 configured to be fixed to the bearing structure of the vehicle by fastening means of known type (not shown for simplicity) and a second end portion 6 provided with a respective metal locking tab 7 (see in particular Figure 2) adapted to couple with the fastening buckle 2 (the fastened position is shown in Figure 1, in Figure 2 the position in which the belt branches are unfastened);

- a second pair 9 of band elements 10d, 10s having the function of the lateral retention of the pilot each provided with a first end portion 11 configured to be fixed to the bearing structure of the vehicle by fastening means of known type (not shown, for simplicity) and a second end portion 12 provided with a respective locking tab 13 adapted to couple with the fastening buckle 2 (the fastened position is shown in Figure 1, in Figure 2 the position in which the belt branches are unfastened);
- a third pair 15 of band elements 16d, 16s having the function of inguinal retention of the pilot each provided with a first end portion 17 configured to be fixed to the, bearing structure of the vehicle by fastening means of known type and a second end portion 18 embodying a band ring tape (visible in Figure 2) adapted to be engaged by the second portion of the band elements 4s, 4d having the function of shoulder straps when the first pair 3 of band elements 4d, 4s are coupled to the fastening buckle (said configuration is illustrated in Figure 1).

The band elements 4d, 4s, 10d, 10s, 16d, 16s are preferably provided with known type devices adapted to adjust their own length so as to adapt the safety belt 1 to the pilot's build. It is however clear that all or part of the band elements 4d, 4s, 10d, 10s, 16d, 16s may be free of adjustment. The band elements are made using known type materials, for example, constituted by a weft of polymer intertwined strands with folded edges. In some applications the material known by the name DYNEMA™ can be used, which provides particular characteristics of lightness presenting an excellent strength/weight ratio.

According to the present invention, each second end portion 12 of the band elements 10s, 10d having a function of lateral retention bears a first/ a second ring 20, 21 obtained by means of a belt portion sewn on the second end portions of the band elements 10s, 10d in the vicinity of the tabs 13 (see Figure 2).

Each ring 20, 21 is configured to allow the passage and the sliding on the inside thereof of the band elements 16d, 16s having the function of inguinal retention.

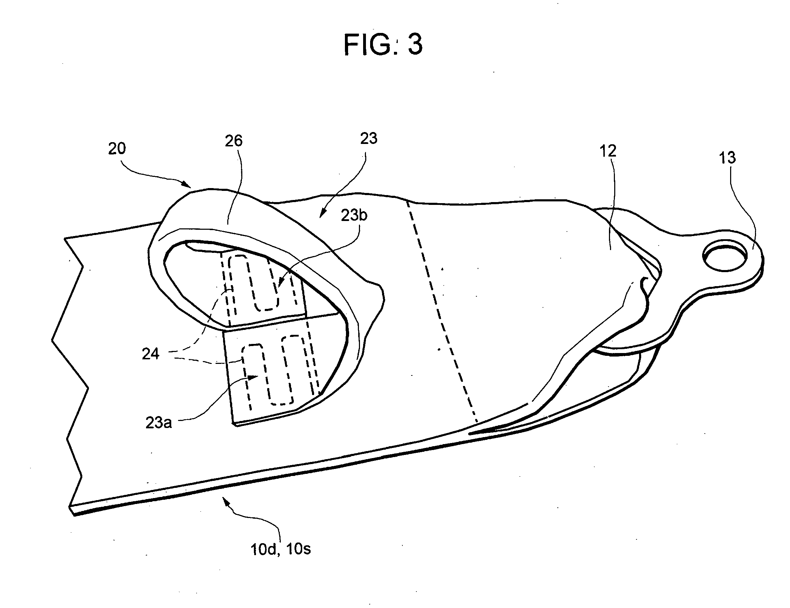

With reference to what is illustrated in Figure 3, each ring 20, 21 comprises a rectangular portion of the belt 23 having a first end portion 23-A stably fixed by means of sewing 24 on the band element 10d, 10s and a second end portion 23-B stably fixed by means of sewing 25 on the band element 10d, 10s. In particular, according to a preferred embodiment, the rectangular portion 23 has a central portion folded on itself along a longitudinal midline; the perimeter facing edges of the central folded portion are permanently connected one to the other by rectilinear sewing 26. Said arrangement facilitates the insertion of the second end portions of the band elements 16d, 16s inside of the first and of the second ring 20,21.

In use, when the safety belt 1 is worn and is fastened (Figures 2) the tabs 7 and 13 are inserted inside the buckle 2 so that the band elements 4d, 4s and 10d, 10s secure the shoulders and the pilot's hips to the vehicle seat (not shown). The band elements 16d, 16s engage the first and second rings 20,21 and the ring end portions of the band elements 16d, 16s surround the second end portions of the band elements 4d, 4s in the vicinity of the tabs 7.

This eliminates any metal element arranged in the vicinity of the pilot's inguinal area as the only metal elements carried by the band elements are tabs which are partly housed inside the buckle 2. The safety of the retention system is, therefore, significantly improved.

## Claims

1. A safety belt for racing car comprising:
- a fastening buckle (2);
- a first pair (3) of band elements (4d, 4s) having the function of shoulder straps each provided with a first end portion (5) configured to be fixed to the bearing structure of the vehicle and a second end portion (6) provided with locking tab (7) adapted to couple with the fastening buckle (2);
- a second pair (9) of band elements (10d, 10s) having the function of the lateral retention of the pilot each provided with a first end portion (11) configured to be fixed to the bearing structure of the vehicle and a second end portion (12) having a locking tab (13) adapted to couple with the fastening buckle (2);
- a third pair (15) of band elements (16d, 16s) having the function of the inguinal retention of the pilot each provided with a first end portion (17) configured to be fixed to the bearing structure of the vehicle and a second end portion (18) forming a ring adapted to be engaged by the second portion of the band elements (4s, 4d) having the function of shoulder straps when the first pair (3) of band elements (4d, 4s) are coupled to the fastening buckle (2);
- belt-guide means carried by the second end portions of the band elements (10d, 10s) having the lateral retention function adapted to enable in their inside the sliding of the band elements (16d, 16s) having the function of inguinal retention,
**characterized in that** said belt-guide means comprise a first/a second ring (20,21) obtained by means of a belt portion sewn on said second end portions (12) of the band elements having the function of lateral retention (10d, 10s).

2. The safety belt according to claim 1, wherein each ring (20, 21) comprises a rectangular belt portion (23) having a first end portion (23-A) stably fixed by sewing (24) on a band element (10d, 10s) having the lateral retention function and a second end portion (23-B) stably fixed by means of sewing (25) on the band element (10d, 10s) having the lateral retention function.

3. The safety belt according to claim 2, wherein the rectangular portion (23) has a central portion folded on itself along a longitudinal midline; the perimeter facing edges of the central folded portion are permanently connected one to the other by rectilinear sewing (26).

## Patentansprüche

1. Sicherheitsgurt für ein Rennfahrzeug, der aufweist:
- eine Befestigungsschnalle (2);
- ein erstes Paar (3) Bandelemente (4d, 4s) mit der Funktion von Schultergurten, die jeweils versehen sind mit einem ersten Endabschnitt (5), der konfiguriert ist, an der tragenden Struktur des Fahrzeugs befestigt zu werden, und einem zweiten Endabschnitt (6), der mit einer Verschlusslasche (7) versehen ist, die geeignet ist, mit der Befestigungsschnalle (2) gekoppelt zu werden;
- ein zweites Paar (9) Bandelemente (10d, 10s) mit der Funktion des lateralen Rückhaltens des Piloten, die jeweils versehen sind mit einem ersten Endabschnitt (11), der konfiguriert ist, an der tragenden Struktur des Fahrzeugs befestigt zu werden, und einem zweiten Endabschnitt (12), der eine Verschlusslasche (13) hat, die geeignet ist, mit der Befestigungsschnalle (2) gekoppelt zu werden;
- ein drittes Paar (15) Bandelemente (16d, 16s) mit der Funktion des Rückhaltens des Piloten im Leistenbereich, die jeweils versehen sind mit einem ersten Endabschnitt (17), der konfiguriert ist, an der tragenden Struktur des Fahrzeugs befestigt zu werden, und einem zweiten Endabschnitt (18), der einen Ring bildet, der geeignet ist, mit dem zweiten Abschnitt der Bandelemente (4s, 4d), die die Funktion von Schultergurten haben, in Eingriff gebracht zu werden, wenn das erste Paar (3) Bandelemente (4d, 4s) mit der Befestigungsschnalle (2) gekoppelt wird;
- eine Gurtführungseinrichtung, die von den zweiten Endabschnitten der Bandelemente (10d, 10s), die die laterale Rückhaltefunktion haben, getragen wird und geeignet ist, in ihrem Innern das Gleiten der Bandelemente (16d, 16s), die die Funktion des Rückhaltens im Leistenbereich haben, zu ermöglichen,
**dadurch gekennzeichnet, dass** die Gurtführungseinrichtung einen ersten/ einen zweiten Ring (20, 21) aufweist, der dadurch gebildet ist, dass ein Gurtabschnitt an die zweiten Endabschnitte (12) der Bandelemente, die die laterale Rückhaltefunktion haben (10d, 10s), angenäht ist.

2. Sicherheitsgurt nach Anspruch 1, wobei jeder Ring (20, 21) aufweist: einen rechtwinkeligen Gurtabschnitt (23) mit einem ersten Endabschnitt (23-A), der mittels Nahtverbindung (24) stabil an einem Bandelement (10d, 10s), das die laterale Rückhaltefunktion hat, befestigt ist, und einem zweiten Endabschnitt (23-B), der mittels Nahtverbindung (25) stabil an dem Bandelement (10d, 10s), das die laterale Rückhaltefunktion hat, befestigt ist.

3. Sicherheitsgurt nach Anspruch 2, wobei der rechtwinkelige Abschnitt (23) einen zentralen Abschnitt hat, der entlang einer sich in Längsrichtung erstreckenden Mittellinie auf sich selbst gefaltet ist; wobei die Randeinfassungskanten des zentralen gefalteten Abschnitts durch eine geradlinige Nahtverbindung (26) dauerhaft miteinander verbunden sind.

## Revendications

1. Ceinture de sécurité pour voiture de course comprenant :
- une boucle de fixation (2) ;
- une première paire (3) d'éléments de bande (4d, 4s) servant de sangles d'épaule, chacun prévu avec une première partie d'extrémité (5) configurée pour être fixée à la structure porteuse du véhicule et une seconde partie d'extrémité (6) prévue avec une languette de verrouillage (7) adaptée pour se coupler avec la boucle de fixation (2) ;
- une deuxième paire (9) d'éléments de bande (10d, 10s) servant de retenue latérale du pilote, chacun prévu avec une première partie d'extrémité (11) configurée pour être fixée à la structure porteuse du véhicule et une seconde partie d'extrémité (12) ayant une languette de verrouillage (13) adaptée pour se coupler avec la boucle de fixation (2) ;
- un troisième paire (15) d'éléments de bande (16d, 16s) servant de retenue inguinale du pilote, chacun prévu avec une première partie d'extrémité (17) configurée pour être fixée à la structure porteuse du véhicule et une seconde partie d'extrémité (18) formant un anneau adapté pour être mis en prise par la seconde partie des éléments de bande (4s, 4d) servant de sangles d'épaule, lorsque la première paire (3) d'éléments de bande (4d, 4s) est couplée à la boucle de fixation (2) ;
- des moyens de guide de ceinture portés par les secondes parties d'extrémité des éléments de bande (10d, 10s) servant de retenue latérale, adaptés pour permettre, dans leur intérieur, le coulissement des éléments de bande (16d, 16s) servant de retenue inguinale,
**caractérisée en ce que** lesdits moyens de guidage de ceinture comprennent un premier/second anneau (20, 21) obtenu au moyen d'une partie de ceinture cousue sur lesdites secondes parties d'extrémité (12) des éléments de bande servant de retenue latérale (10d, 10s).

2. Ceinture de sécurité selon la revendication 1, dans laquelle chaque anneau (20, 21) comprend une partie de ceinture rectangulaire (23) ayant une première partie d'extrémité (23-A) fixée de manière stable par couture (24) sur un élément de bande (10d, 10s) servant de retenue latérale et une seconde partie d'extrémité (23-B) fixée de manière stable par couture (25) sur l'élément de bande (10d, 10s) servant de retenue latérale.

3. Ceinture de sécurité selon la revendication 2, dans laquelle la partie rectangulaire (23) a une partie centrale pliée sur elle-même le long d'une ligne centrale longitudinale ; les bords faisant face au périmètre de la partie pliée centrale sont raccordés de manière permanente les uns aux autres par couture rectiligne (26).
